# EUROPÄISCHE PATENTSCHRIFT

(11) **EP 3 989 778 B1**
(45) Veröffentlichungstag und Bekanntmachung des Hinweises auf die Patenterteilung: **14.06.2023**
(21) Anmeldenummer: 20734934.1
(22) Anmeldetag: 25.06.2020
(51) Int. Cl.: A47G 21/18, B08B 9/00

(54) **REINIGUNGSVORRICHTUNG FÜR EINEN TRINKHALM**
CLEANING DEVICE FOR A DRINKING STRAW
DISPOSITIF DE NETTOYAGE POUR UNE PAILLE

(30) Priorität: 25.06.2019 DE 102019117115
(43) Veröffentlichungstag der Anmeldung: 04.05.2022
(73) Patentinhaber: Vitajuwel GmbH, 88175 Scheidegg (DE)
(72) Erfinder: EISEN, Ewald, 88175 Scheidegg (DE)
(74) Vertreter: Zimmermann & Partner Patentanwälte mbB
(86) Internationale Anmeldenummer: PCT/EP2020/067920
(87) Internationale Veröffentlichungsnummer: WO 2020/260512

(56) Entgegenhaltungen:
- KR-A- 20160 045 511
- KR-B1- 101 786 168
- US-A1- 2017 216 890
- US-B1- 10 123 641
- KASINATORHH: "Straw Washing Adapter (Reuse/Recycling)", INTERNET CITATION, 18 May 2019 (2019-05-18), pages 1-2, XP009533444, Retrieved from the Internet: URL:https://www.thingiverse.com/thing:3638 649/comments [retrieved on 2020-04-30]

## Beschreibung

### Technisches Gebiet

Die vorliegende Erfindung betrifft eine Reinigungsvorrichtung für röhrenförmigen Trinkunterstützungen, insbesondere für Trinkhalme, vulgo "Strohhalm".

### Vorbekannter Stand der Technik

Es ist bekannt, dass Getränke durch Konsumenten gerne mithilfe von Trinkhalmen konsumiert werden. Dabei wird ein Ende eines Trinkhalms in ein flüssiges Getränk getaucht und ein anderes Ende in den Mund des Trinkenden genommen. Durch Herstellen eines Unterdrucks im Mundraum des Trinkenden wird das Getränk in den Mund transportiert.

Derartige Trinkhalme sind weitläufig bekannt und verbreitet. Zudem sind diese Trinkhalme für den Einmalgebrauch meist aus Kunststoff hergestellt. Entsprechend verursachen Einweg-Trinkhalme eine beachtliche Menge an Abfall.

Weiterhin sind wiederverwendbare Trinkhalme bekannt, beispielsweise aus widerstandsfähigem Kunststoff, Glas, Metall, etc., die nach dem Gebrauch gereinigt werden müssen.

Eine Reinigungsvorrichtung für einen Trinkhalm (Straw Washing Adapter) nach dem Oberbegriff des Anspruchs 1 ist auf der Internetseite: https://www.thingiverse.com/thing:3638649/comments offenbart.

### Nachteile des Stands der Technik

Das Reinigen eines Trinkhalms ist meistens aufwendig und ineffizient, da beispielsweise spezielle, sehr dünne Bürsten o. ä. Hilfsmittel zum Einsatz kommen.

### Problemstellung

Eine Aufgabe der vorliegenden Erfindung ist es daher, eine Vorrichtung zum Reinigen des Trinkhalms bereitzustellen, welche einen einfachen und robusten Aufbau aufweist und gleichzeitig eine Verbesserung der Anwendung und des Reinigungsergebnisses mit sich bringt.

### Erfindungsgemäße Lösung

Die obige Aufgabe wird durch eine Reinigungsvorrichtung für einen Trinkhalm nach Anspruch 1 gelöst.

Die Reinigungsvorrichtung, geeignet zum Reinigen eines Trinkhalms, lässt sich dabei in einen Anschlussabschnitt, einen Auslassabschnitt und einen dazwischenliegenden Einwirkabschnitt unterteilen. Insbesondere dient die Untergliederung in die Abschnitte dazu, in strukturierter Weise die Funktion der Reinigungsvorrichtung darlegen zu können, wobei die Abschnitte auch baulich, vollständig oder zumindest teilweise, voneinander differenzierbar sein können. Beispielsweise ist denkbar, dass die Reinigungsvorrichtung, insbesondere baulich, einen Anschlussabschnitt, einen daran anschließenden und damit verbundenen Einwirkabschnitt und einen sich daran anschließenden und damit verbundenen Auslassabschnitt aufweist.

Der Anschlussabschnitt ist über den Einwirkabschnitt strömungstechnisch, d. h. zum Durchleiten eines Fluides und/oder Fluidströmung mit dem Auslassabschnitt verbunden, wobei die Reinigungsvorrichtung einen Eingangsquerschnitt und einen Ausgangsquerschnitt aufweist. Vorzugsweise ist der Eingangsquerschnitt durch eine Fläche des Eingangsquerschnitts, d.h. durch eine Querschnittsfläche und/oder einen Durchmesser des Anschlussabschnitts, und der Ausgangsquerschnitt entsprechend durch eine Fläche des Ausgangsquerschnitts, d.h. durch eine Querschnittsfläche und/oder durch den Auslassabschnitt gebildet.

Die Reinigungsvorrichtung ist grundsätzlich zum Durchleiten eines Fluides, bevorzugt jedoch zum Durchleiten einer Flüssigkeit, insbesondere einer Reinigungsflüssigkeit, insbesondere von Wasser konzipiert. Wenn im Folgenden stets von einem Fluid gesprochen wird, so ist stets je eine Ausführungsform eines gasförmigen und/oder eines flüssigen Fluides umfasst.

Weiterhin weist der Einwirkabschnitt eine Dynamikeinrichtung zur Manipulation der Fluidströmung durch die Reinigungsvorrichtung auf. Die Dynamikeinrichtung kennzeichnet sich dadurch aus, dass eine Strömungsdynamik des Fluides durch die Dynamikeinrichtung beim Durchströmenden des Einwirkabschnitts erhöht wird.

Es wird offenbart, dass der Einwirkabschnitt und/oder die Dynamikeinrichtung derart ausgebildet ist/sind, sodass sich ein Strömungsquerschnitt durch den Einwirkabschnitt zwischen dem Eingangsquerschnitt zum Ausgangsquerschnitt vollständig oder zumindest abschnittsweise oder durchgehend monoton verringert. Dies bewirkt, dass ein durch die Reinigungsvorrichtung strömendes Fluid besonders effizient im Einwirkabschnitt manipuliert wird, zum Beispiel durch Eintrag von Wirbeln, Rotationen und/oder Erhöhung von Strömungsgeschwindigkeiten. Dies wiederum hat zur Folge, dass das aus dem Auslassabschnitt über die Aufnahmeeinrichtung in einen Trinkhalm einströmendes Fluid eine besonders gute Reinigungswirkung entfalten kann. Vorzugsweise ist der Einwirkabschnitt düsenartig konstruiert, sodass zwischen dem Eingangsquerschnitt und dem Ausgangsquerschnitt eine Strömungsgeschwindigkeit des Fluides zunimmt.

Die Dynamikeinrichtung weist mindestens einem Strömungsmanipulator auf, welcher derart ausgeformt und in der Einwirkeinrichtung angeordnet ist, sodass eine rotative Bewegungskomponente in das die Reinigungsvorrichtung durchströmende Fluid eingetragen werden kann. Die rotative Bewegungskomponente bewirkt dabei vorzugsweise eine strudelartige Spiralbewegung des Fluides in Umfangsrichtung. Auf diese Weise verlässt das Fluid den Auslassabschnitt der Reinigungsvorrichtung mit erhöhter axialer Geschwindigkeit und/oder mit einer kreisförmigen in Umfangsrichtung ausgerichteten Bewegungskomponente. Das so dynamisierte Fluid kann derart aufgeladen in den zu reinigenden Trinkhalm eintreten und reisst darin festhaftende Schmutzpartikel verbessert mit.

Zusätzlich oder unabhängig davon, kann der Einwirkabschnitt als Zwischenabschnitt zwischen dem Anschlussabschnitt und dem Auslassabschnitt verstanden werden.

Zusätzlich oder alternativ kann der Eingangsquerschnitt am Eingang des Einwirkabschnitts und der Auslassquerschnitt am Auslass des Einwirkabschnitts verortet werden.

Der Anschlussabschnitt kann vorzugsweise so ausgebildet sein, sodass eine feste, aber lösbare Verbindung der Reinigungsvorrichtung mit einem Wasserhahn, insbesondere mit einem Hahnauslass des Wasserhahns herstellbar ist. Beispielsweise ist der Anschlussabschnitt zumindest teilweise mit einer zylinderförmigen Anschlussinnenfläche ausgestaltet, sodass der Anschlussabschnitt über eine Außenzylinderfläche des Hahnauslasses gestülpt werden kann und damit eine feste, abdichtende und lösbare Verbindung eingeht.

Gemäß einer Ausführungsform ist der Anschlussabschnitt derart mit einer Anschlussinnenfläche mit einem Innendurchmesser, insbesondere einstückig, aus einem Elastomer, aus Silikon , Acrylat-Kautschuk oder aus Natur-Kautschuk hergestellt, sodass die Reinigungsvorrichtung an einen Hahnauslass eines Wasserhahns eines Küchenspülbeckens aufsteckbar ist, insbesondere wobei der Hahnauslass einen maximalen Außendurchmesser von mehr als 15 mm, insbesondere mehr als 20 mm, bevorzugt mehr als 22 mm, und/oder weniger als 35 mm, insbesondere weniger als 30 mm, bevorzugt weniger als 28mm, und/oder in etwa 20 mm, in etwa 25 mm, und/oder in etwa 30 mm beträgt. Ein entsprechender standardmäßiger Hahnauslass weiß dazu einen zylinderförmigen Abschnitt mit einer Außenzylinderfläche auf, woran die Anschlussinnenfläche des Anschlussabschnitts angelegt werden kann. Insbesondere gilt im Kontext dieser Patentanmeldung ein Wasserhahn einer Badezimmer- oder Toilettenarmatur nicht als Wasserhahn eines Küchenspülbeckens.

Der Auslassabschnitt ist mit einer Aufnahmeeinrichtung zur Aufnahme eines Trinkhalms ausgebildet. Dazu weist die Aufnahmeeinrichtung eine Dichtfläche auf, sodass ein Trinkhalm bei Anlage an diese Dichtfläche abdichtend von dem Auslassabschnitt aufgenommen werden kann.

Die Aufnahmeeinrichtung ist dabei so gestaltet, dass ein Trinkhalm mit einem Außendurchmesser von mindestens 2 mm, bevorzugt mindestens 3 mm, besonders bevorzugt mindestens 4,5 mm und/oder von maximal 10 mm, bevorzugt maximal 8 mm, besonders bevorzugt 6,5 mm wirksam abgedichtet aufgenommen werden kann.

Anhand der Aufnahmeeinrichtung für den Trinkhalm wird eine Axialrichtung, eine Radialrichtung und eine Umfangsrichtung definiert, wobei die Dichtfläche der Aufnahmeeinrichtung zumindest teilweise Kegelstumpf-förmig trichterförmig ausgebildet ist. Insbesondere kann die Aufnahmeeinrichtung Konus-förmig konzipiert sein, sodass diese einen Kombinationsanschlag in Radialrichtung und in Axialrichtung für den Trinkhalm ausbildet. Die beschriebene Kegelstumpf- und/oder Konus-Form, bezieht sich insbesondere auf einen Schnitt in Axialrichtung der Aufnahmeeinrichtung.

Eine dichtende Aufnahme eines Trinkhalms in der Aufnahmeeinrichtung wird dadurch erzielt, dass eine axiale Kante des Trinkhalms und/oder eine seitliche Wandung im Bereich einer axialen Kante des Trinkhalms insbesondere durch ein Heranführen des Trinkhalms in/an die Aufnahmeeinrichtung einen körperlichen, abdichtenden Kontakt mit der Dichtfläche aufbaut.

Gemäß einer Ausführungsform ist ein Querschnitt der Dichtfläche und/oder mehrere in Axialrichtung beabstandete Querschnitte der Dichtfläche, zumindest teilweise, in Radialrichtung kreisrund oder oval ausgebildet.

Gemäß einer weiteren, insbesondere unabhängigen Ausführungsform ist die Kegelstumpf-förmig-und/oder Konus-Oberfläche, und/oder die Dichtfläche der Aufnahmeeinrichtung gegenüber der Axialrichtung mit einem Winkel von mindestens 8°, insbesondere mindestens 10°, bevorzugt mindestens 15°, insbesondere bevorzugt mindestens 18°, und/oder von maximal 45°, insbesondere maximal 30°, bevorzugt maximal 25°, insbesondere bevorzugt maximal 22° geneigt. Dadurch wird erreicht, dass die Aufnahme des Trinkhalms an der Dichtfläche besonders präzise und abdichtend erfolgt. Bei geringen Winkeln kann sich ein Klemmeffekt des Trinkhalms in der Aufnahmeeinrichtung ergeben, durch die Handhabung des Reinigungsvorgangs weiter vereinfacht wird.

Gemäß einer Ausführungsform kann die Dichtfläche zur Aufnahme eines Trinkhalms an einer Außenseite der Aufnahmeeinrichtung oder an einer Innenseite der Aufnahmeeinrichtung ausgebildet sein.

Ist die Dichtfläche an der Außenseite vorgesehen, so wird der Trinkhalm zumindest teilweise über die Aufnahmeeinrichtung gestülpt, sodass die Dichtfläche an eine Innenseite von Wandungen des Trinkhalms, insbesondere an einen inneren Kantenbereich des Trinkhalms anliegt. Optional bezugnehmend auf die zuvor angeführten Winkelangaben ist in diesem Fall die Dichtfläche gegenüber der Axialrichtung mit einem Winkel geneigt, der entgegen einer Strömungsrichtung des Fluides geöffnet ist.

Ist die Dichtfläche an der Innenseite vorgesehen, so wird der Trinkhalm zur Aufnahme zumindest teilweise in die Aufnahmeeinrichtung eingeführt, wobei die Dichtfläche Seitenwandungen und/oder einen äußeren Kantenbereich des Trinkhalms umfasst d.h. überstülpt. Optional bezugnehmend auf die zuvor angeführten Winkelangaben ist in diesem Fall die Dichtfläche gegenüber der Axialrichtung mit einem Winkel geneigt, der in einer Strömungsrichtung des Fluides geöffnet ist.

Weiterhin kann die Reinigungsvorrichtung, der Anschlussabschnitt und/oder der Auslassabschnitt so konzipiert sein, sodass ein Verhältnis von Eingangsquerschnitt zu Ausgangsquerschnitt mehr als 10, insbesondere mehr als 15, bevorzugt mehr als 20, insbesondere bevorzugt mehr als 23, und/oder weniger als 40, insbesondere weniger als 35, bevorzugt weniger als 30, insbesondere bevorzugt weniger als 28, und/oder in etwa 25 beträgt. Bevorzugt dient der Einwirkabschnitt dazu, einen Strömungsquerschnitt durch die Reinigungsvorrichtung vom Eingangsquerschnitt zum Ausgangsquerschnitt entsprechend des beschriebenen Verhältnisses zu reduzieren. Auf diese Weise wird die kinetische und/oder potentielle Energie und/oder Strömungsverhältnisse eines durch die Reinigungsvorrichtung strömenden Fluides durch den Einwirkabschnitt derart manipuliert, sodass ein aus der Reinigungsvorrichtung austretendes und in einen daran angesetzten Trinkhalm ein strömendes Fluid eine hohe mechanische Reinigungswirkung auf Innenflächen des Trinkhalms ausübt.

Im Kontext der Patentanmeldung wird offenbart, dass zumindest der Anschlussabschnitt der Reinigungsvorrichtung und/oder die Aufnahmeeinrichtung des Auslassabschnitts, teilweise oder vollständig, aus einem flexiblen Werkstoff hergestellt ist/sind.

Gemäß einer Weiterentwicklung ist/ zumindest der Anschlussabschnitt der Reinigungsvorrichtung und/oder die Aufnahmeeinrichtung des Auslassabschnitts aus einem Elastomer, aus Silikon - oder einem Werkstoff der Gruppe der Poly(organo)siloxane -, aus Acrylat-Kautschuk oder aus Natur-Kautschuk hergestellt, insbesondere unter Anwendung eines 3-dimensionalen Druckverfahrens. Indem beispielsweise der Anschlussabschnitt und/oder die Aufnahmeeinrichtung auf diese Weise flexibel gestaltet wird/werden, kann ein einfaches Anbringen der Reinigungsvorrichtung an einen Hahnauslass und/oder eine abdichtende Aufnahme eines Trinkhalms in der Aufnahmeeinrichtung erreicht werden.

Gemäß einer Weiterentwicklung ist die Dynamikeinrichtung und/oder der Strömungsmanipulator der Dynamikeinrichtung als Schneckenelement mit mindestens einem, bevorzugt mit mindestens zwei, weiter bevorzugt mit mindestens drei Gewindegänge ausgebildet. So kann ein Ausbilden einer rotativen Bewegungskomponente des Fluides erheblich verbessert werden.

Weiterhin kann die Dynamikeinrichtung und/oder der Strömungsmanipulator als Einsatzelement in die Reinigungsvorrichtung und/oder in den Einwirkabschnitt gestaltet sein.

Bevorzugt können Anschlussabschnitt, Einwirkabschnitt und Auslassabschnitt einstückig aus einem flexiblen Werkstoff, beispielsweise aus den zu vorgenannten Werkstoffen, hergestellt sein. Dazu kann die Dynamikeinrichtung mit einem oder mit mehreren Strömungsmanipulatoren, bevorzugt ausgebildet als Schneckenelement mit in Radialrichtung offenen Gewindegängen, in den Einwirkabschnitt einsetzbar gestaltet sein, sodass die offenen Gewindegänge des Schneckenelements mit Innenwandungen des Einwirkabschnitts geschlossene Gewindegänge ausbilden.

Weiterhin ist denkbar, den Einwirkabschnitt und das Schneckenelement so auszubilden, sodass die Gewindegänge hin zur Aufnahmeeinrichtung zumindest teilweise einen sich verjüngenden Strömungsquerschnitt aufweisen. D. h. ein Strömungsquerschnitt eines Gewindegangs am Eingang der Einwirkeinrichtung ist größer als ein Strömungsquerschnitt eines Gewindegangs am Ausgang der Einwirkeinrichtung. Insbesondere ist/sind das Schneckenelement und/oder der Einwirkabschnitt so gestaltet, dass ein Strömungsquerschnitt des Gewindegangs monoton abnimmt.

Gemäß einer weiteren Ausführungsform ist das Schneckenelement derart ausgebildet, sodass eine Steigung eines Gewindegangs gegenüber einer von der Radialrichtung des Schneckenelements aufgespannten Querschnittsebene mehr als 20°, insbesondere mehr als 30°, bevorzugt mehr als 35°, insbesondere bevorzugt mehr als 40°, und/oder weniger als 70°, insbesondere weniger als 60°, bevorzugt weniger als 55°, insbesondere bevorzugt weniger als 50°, und/oder in etwa 45° beträgt.

Im Zuge von Versuchen konnte die Anmelderin entsprechend ausgestaltete Schneckenelemente als vorteilhaft identifizieren, wobei sich ein ideales Verhältnis von Umfangsgeschwindigkeit und/oder Rotationsgeschwindigkeit zur Strömungsgeschwindigkeit in Axialrichtung der Aufnahmeeinrichtung einstellt. Das ideale Verhältnis kennzeichnet sich dadurch aus, dass die Reinigungswirkung des Trinkhalms besonders hoch ist.

Gemäß einer weiteren Ausgestaltungsform, nimmt ist eine Steigung eines Gewindegangs im Bereich des Eingangs des Einwirkabschnitt oder des Schneckenelement größer als eine Steigung im Bereich des Ausgangs. Die somit vom Eingangsquerschnitt zum Auslassquerschnitt zumindest teilweise oder stetig abnehmende Steigung führt zu einem besonders wirksamen Eintrag einer rotativen Komponente in die Bewegung des Fluides.

Gemäß eines weiteren, insbesondere alternativen Aspektes ist der Anschlussabschnitt als oder mit einer Adaptereinrichtung zum Anschluss an einen Hahnauslass oder Wasserhahn ausgebildet. Die Adaptereinrichtung ist so gestaltet, sodass diese fest, aber lösbar, insbesondere mit einem Gewinde, eines Wasserhahns verbunden werden kann. Beispielsweise gelingt auf diese Weise, die Reinigungsvorrichtung an einen speziell dafür vorgesehenen Wasserhahn zumindest temporär fest, bevorzugt mittels Form- und/oder Reibschluss, z.B. durch Aufschrauben, anzuschließen. Ein solcher Anschluss eignet sich besonders zum Einsatz der Reinigungsvorrichtung in professionellem Umfeld, zum Beispiel in der Gastronomie, wo eine hohe Anzahl von Trinkhalmen zu reinigen sind.

Weiterhin wird offenbart, dass die Reinigungsvorrichtung eine Ventileinrichtung aufweisen kann, welche derart ausgebildet ist, dass ein Anlegen eines Trinkhalms an die Aufnahmeeinrichtung des Auslassabschnitts und/oder unter Ausübung einer Kontaktkraft auf denselben zu einem Öffnen der Ventileinrichtung führt. Folglich ist die Reinigungsvorrichtung mithilfe der Ventileinrichtung stets verschlossen, solange kein Trinkhalm an die Aufnahmeeinrichtung angesetzt wird und/oder solange keine Kraft auf einen Teil der Ventileinrichtung oder der Reinigungsvorrichtung, zum Beispiel durch einen Finger, ausgeübt wird.

Sobald eine solche Kontaktkraft, insbesondere in Axialrichtung, auf eine Ventileinrichtung oder eine Komponente der Ventileinrichtung ausgeübt wird, wird ein Strömungsquerschnitt der Ventileinrichtung freigegeben, sodass das Fluid durch die Reinigungseinrichtung zum Auslassabschnitt strömen kann.

Insbesondere ist die Ventileinrichtung so gestaltet, dass ein Strömungsquerschnitt durch eine Ventilkomponente verschlossen wird solange ein unter Druck stehendes Fluid die Ventilkomponente beaufschlagt und keine Kontaktkraft entgegen der Druckkraft ausgeübt wird. Somit kann in einfacher Art und Weise die Reinigungsvorrichtung betätigt werden.

Die vorstehend beschriebenen Ausführungsformen können beliebig, jedoch in sinnhafter Weise miteinander kombiniert werden, wobei beispielsweise der Anschlussabschnitt mit einer Adaptereinrichtung zum festen, aber lösbaren Anbringen an einen Wasserhahn ausgebildet sein kann, und gleichzeitig eine Ventileinrichtung zum vereinfachten Betätigen vorgesehen sein kann. Eine solche Kombination eignet sich besonders gut für den professionellen Einsatz der Reinigungsvorrichtung.

### Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu.

Gleiche Bezugszeichen bezeichnen gleiche oder entsprechend ähnliche Teile.
Fig. 1 zeigt einen Wasserhahn mit einem Hahnauslass und einer darauf aufgestellten Reinigungsvorrichtung gemäß einer ersten Ausführungsform,
Fig. 2 einen Längsschnitt durch die Reinigungsvorrichtung gemäß Fig. 1,
Fig. 3 einen Ausschnitt eines Längsschnitts durch die Reinigungsvorrichtung gemäß Fig. 1,
Fig. 4 einen Ausschnitt eines Längsschnitts durch eine zweite Ausführungsform eine Reinigungsvorrichtung, und
Fig. 5 einen Längsschnitt durch eine dritte Ausführungsform einer Reinigungsvorrichtung.

### Ausführungsbeispiele

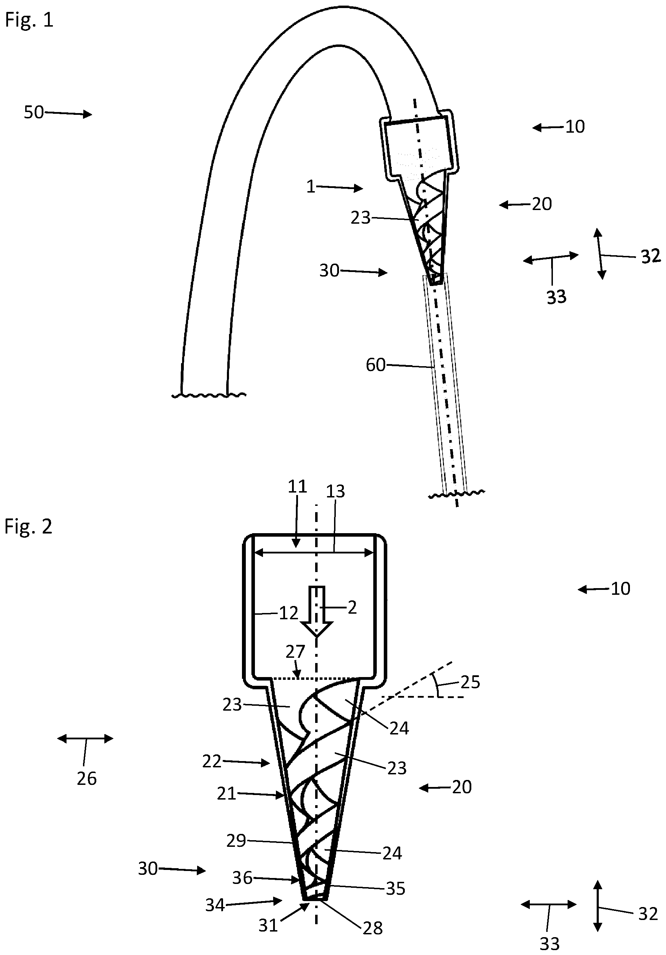

Zur Verdeutlichung des Gesamtverständnisses wird anhand Fig. 1 ein exemplarischer Wasserhahn 50 mit einem Hahnauslass 51 gezeigt, woran eine Reinigungsvorrichtung 1 gemäß einer ersten Ausführungsform angeordnet ist. Dabei ist ein exemplarischer Trinkhalm 60 an einen Auslassabschnitt 30 der Reinigungsvorrichtung angesetzt dargestellt.

Die Reinigungsvorrichtung 1 weist neben dem Auslassabschnitt 30 einen Einwirkabschnitt 20 und einen Anschlussabschnitt 10 auf, wobei Letzterer zum Anschluss der Reinigungsvorrichtung 1 an den Hahnauslass 51 verwendet wird.

Fig. 2 dient zur detaillierten Beschreibung der ersten Ausführungsform der Reinigungsvorrichtung 1. Der Anschlussabschnitt 10, ein Querschnitt eines Innendurchmessers 13 und/oder ein Eingang 27 kann dazu herangezogen werden, einen Eingangsquerschnitt 11 des Anschlussabschnitts 10 zu definieren. Der Eingang 27 ist mithilfe einer unterbrochenen Linie dargestellt, da dieser Eingang 27 nicht zwingend als Bauteil oder gegenständlich ausgebildet sein muss.

Der Anschlussabschnitt 10 ist mit einer Anschlussinnenfläche 12 ausgestattet, welche durch Aufstecken um den Hahnauslass 51 angelegt werden kann. Dabei ist mindestens die Anschlussinnenfläche 12 oder der gesamte Anschlussabschnitt 10 aus einem flexiblen Material, zum Beispiel aus Silikon, hergestellt, sodass die Reinigungsvorrichtung 1 aufgrund eines Reibschlusses zwischen einer Außenzylinderfläche 52 des Hahnauslasses 51 und der Anschlussinnenfläche 13 in auf gestecktem Zustand an dem Wasserhahn 50 verbleibt. Dazu ist ein Innendurchmesser 13 des Anschlussabschnitts 10 und eine Flexibilität des Anschlussabschnitts 10 derart gewählt, dass ein üblicher Wasserdruck an einem Wasserhahn eines Spülbecken nicht dazu ausreicht, die Reinigungsvorrichtung 1, insbesondere in einem verschlossenen Zustand, vom Hahnauslass 51 durch Überdruck zu entfernen.

An einem unteren Ende der Reinigungsvorrichtung 1 befindet sich der Auslassabschnitt 30 mit einer Aufnahmeeinrichtung 34 zur Aufnahme eines Trinkhalms 60. Dabei wird ein Auslassquerschnitt 31 durch einen Strömungsquerschnitt der Aufnahmeeinrichtung 34 und/oder durch einen Ausgang 28 des Einwirkabschnitts 20 definiert. Insbesondere können Ausgang 28 und der Ausgangsquerschnitt 31 örtlich unmittelbar zusammenfallen.

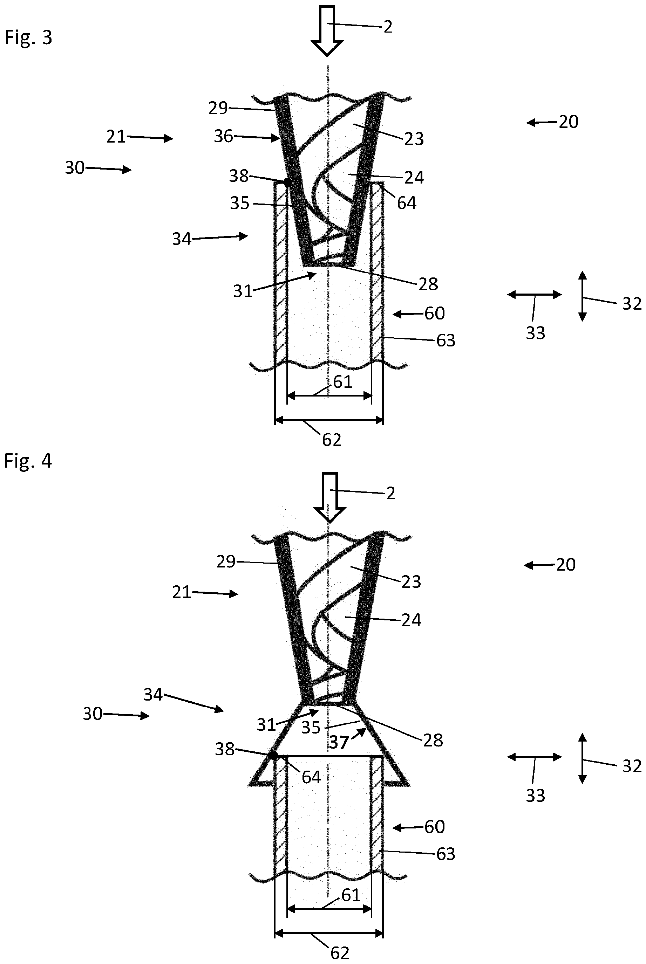

Die Aufnahmeeinrichtung 34 (siehe auch Fig. 3) definiert dabei eine Axialrichtung 32 und einer Radialrichtung 33, wobei Radialrichtung 33 der Aufnahmeeinrichtung 34 in den vorliegenden Ausführungsformen mit einer Radialrichtung 26 eines Schneckenelement 23 zusammenfällt. Ein solches Zusammenfallen kann jedoch je nach Ausführung unterbleiben.

Mittels Fig. 2 wird weiterhin deutlich, dass sich der Einwirkabschnitt 20 in Strömungsrichtung 2 an den Anschlussabschnitt 10 anschließt. Der Einwirkabschnitt 20 zeigt eine Dynamikeinrichtung 21 mit einem als Schneckenelement 23 ausgebildeten Strömungsmanipulator 22. Das Schneckenelement 23 weist in Radialrichtung 26 des Schneckenelements 23 offene Gewindegänge 24 auf, die zusammen mit einer Wandung 29 des Einwirkabschnitt 20 geschlossene Gewindegänge 24 zum Eintragen einer rotativen Bewegungskomponente in ein die Reinigungsvorrichtung 1 durchströmendes Fluid formt.

Das Schneckenelement 23 kann dabei so geformt sein, dass eine bestimmte Steigung 25 in Umfangsrichtung des Schneckenelements 23 bezüglich einer durch die Radialrichtung 26 des Schneckenelements 23 gebildeten Querschnittsfläche eingestellt wird.

Fig. 3 verdeutlicht den Aufbau des Auslassabschnitts 30 der in Fig. 2 gezeigten ersten Ausführungsform der Reinigungsvorrichtung 1. Insbesondere wird die Aufnahme eines Trinkhalms 60 an der Aufnahmeeinrichtung 34 beschrieben. Der Einwirkabschnitt 20 mit dem Schneckenelement 23, dessen Ausgang 28 unmittelbar mit dem Ausgangsquerschnitt 31 des Auslassabschnitts 30 zusammenfällt, ist nur teilweise dargestellt.

Die Aufnahmeeinrichtung 34 des Auslassabschnitts 30 wird gemäß dieses Ausführungsbeispiels -jedoch nicht limitiert darauf - durch eine Außenseite 36 der Wandung 29 des Einwirkabschnitts 20 gebildet. Um einen dichtenden Kontakt zwischen dem Trinkhalm 60 und der Aufnahmeeinrichtung 34 herstellen zu können, wird der Trinkhalm 60 in Axialrichtung 32 an die Aufnahmeeinrichtung 34 herangeführt und daran angepresst. Eine Kante 64 der Wandung 63 des Trinkhalms 60 stößt an die konisch ausgeformte Dichtfläche 35 auf der Außenseite 36, wodurch die Dichtfläche 35, die Außenseite 36 und/oder die Wandung 29 einen kombinierten Axial- und Radialanschlag 38 für den Trinkhalm bildet. Der Ort des wirksamen, kombinierten Axial- und Radialanschlags 38 bestimmt sich in diesem Fall durch einen Innendurchmesser 61 des Trinkhalms 60. Insbesondere ist die Aufnahmeeinrichtung 34 in Axialrichtung 32 und in Strömungsrichtung 2 konisch verjüngend gestaltet.

Befindet sich die Reinigungsvorrichtung 51 mit auf gestecktem Trinkhalm 60 an dem Wasserhahn 50, und wird Letzterer aufgedreht, so strömt das Fluid, insbesondere Wasser, in Strömungsrichtung 2 in den Anschlussabschnitt 10, tritt in den Einwirkabschnitt 20 ein, passiert die Dynamikeinrichtung 21 mit dem als Schneckenelement 23 ausgebildeten Strömungsmanipulator 22, und tritt am Ausgang 28 durch den Ausgangsquerschnitt 31 des Auslassabschnitts 30 in den Trinkhalm 60 ein. Da das Fluid die Gewindegänge 24 der Dynamikeinrichtung 21 des Einwirkabschnitts 20 durchlaufen hat, ist dieses Fluid hochgradig turbulent und/oder zumindest mit einer rotativen Komponente behaftet, und weist durch die dadurch bedingten Kräfte ein verbessertes Reinigungsvermögen einer Innenfläche des Trinkhalms 60 auf.

Anhand von Fig. 4 wird ein zweites, alternatives Ausführungsbeispiel einer Reinigungsvorrichtung 1, insbesondere mit einer alternativ ausgebildeten Aufnahmeeinrichtung 34, gezeigt. Grundsätzlich unterscheidet sich die Reinigungsvorrichtung 1 gemäß Fig. 4 von der Reinigungsvorrichtung 1 gemäß Fig. 3 nur durch die Aufnahmeeinrichtung 34. Entsprechend wird bezüglich gleich gebliebener Inhalte auf die voranstehenden Ausführungen verwiesen.

Die Aufnahmeeinrichtung 34 gemäß Fig. 4 basiert auf einer umgekehrten Geometrie der Aufnahme des Trinkhalms 60 dahingehend, dass die Dichtfläche 35 an einer Innenseite 37 der Aufnahmeeinrichtung 34 angeordnet ist. Die Aufnahmeeinrichtung 34 ist in Axialrichtung 32 und in Strömungsrichtung 2 teilweise konisch und sich-aufweitend, also mit einem sich in Strömungsrichtung 2 vergrößernden Durchmesser oder Strömungsquerschnitt gestaltet, sodass der Kombinationsanschlag 38 an der Innenseite 37 der Aufnahmeeinrichtung 34 ausgebildet wird.

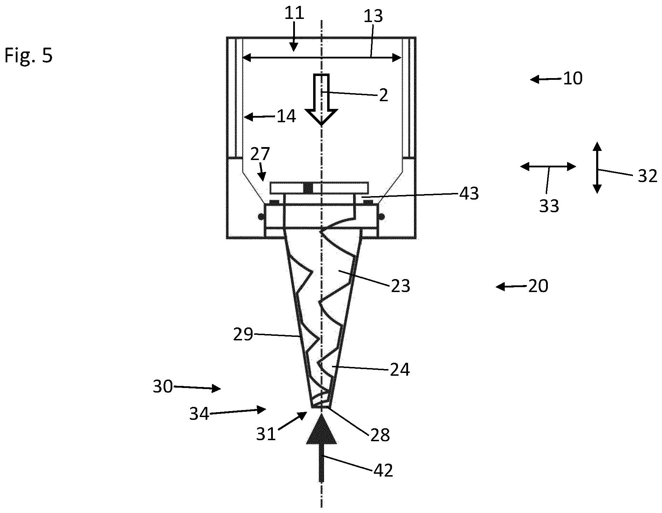

Fig. 5 beschreibt ein drittes Ausführungsbeispiel einer Reinigungsvorrichtung 1 mit einer Ventileinrichtung 40. Insbesondere bezüglich des Auslassabschnitts 30 ist die Reinigungsvorrichtung 1 gemäß Fig. 5 im Wesentlichen identisch mit der ersten Ausführung einer Reinigungsvorrichtung 1 (Fig. 1 bis 3) konzipiert. Entsprechend wird auf Voranstehendes verwiesen.

Der Anschlussabschnitt 10 hingegen ist mit einer Adaptereinrichtung 15 versehen, sodass die Reinigungsvorrichtung 1 fest, jedoch lösbar mit einem Gewinde eines Hahnauslasses 51 verbindbar ist. Entsprechend ist die Anschlussinnenfläche 12 mit einem innenliegenden Gewinde 14 ausgestattet.

Weiterhin unterscheidet sich die Ausführungsform gemäß Fig. 5 von den Voranstehenden durch die Ventileinrichtung 40, welche durch eine Kontaktkraft 42 betätigbar ist. Die Kontaktkraft 42 kann beispielsweise durch einen Aufsteckvorgang eines Trinkhalms 60 auf den Auslassabschnitt 30, insbesondere auf die äußere Dichtfläche 35 der Aufnahme 34 bereitgestellt werden. Entsprechend hebt sich durch die Kontaktkraft 42 eine Ventilkomponente 41, welche beispielsweise den Strömungsmanipulator 22, vorzugsweise ausgebildet als Schneckenelement 23, umfassen kann. Dieses Anheben führt dazu, dass ein Ventilquerschnitt 43 freigegeben wird und ein Fluid, insbesondere Wasser, die Einwirkeinrichtung 20 hin zum Ausgangsquerschnitt 31 in Strömungsrichtung 2 durchströmen kann.

Liegt keine Kontaktkraft 42 an, so kann gemäß einer spezifischen Ausgestaltung die Ventileinrichtung 40 und die Ventilkomponente 41 derart ausgebildet sein, sodass ein im Anschlussabschnitt 10 vorhandener Fluiddruck die Ventileinrichtung 40 schließt und in geschlossenem Zustand hält.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der in den Ansprüchen definierten Erfindung abzuweichen. Beispielsweise kann die beschriebene dritte Ausführungsform der Reinigungsvorrichtung 1 mit Ventileinrichtung 40 mit einer Aufnahmeeinrichtung gemäß der zweiten Ausführungsform kombiniert werden.

**Bezugszeichenliste**

| | | | |
|---|---|---|---|
| 1 | Reinigungsvorrichtung | 30 | Auslassabschnitt |
| 2 | Strömungsrichtung | 31 | Ausgangsquerschnitt |
| | | 32 | Axialrichtung |
| 10 | Anschlussabschnitt | 33 | Radialrichtung |
| 11 | Eingangsquerschnitt | 34 | Aufnahmeeinrichtung |
| 12 | Anschlussinnenfläche | 35 | Dichtfläche |
| 13 | Innendurchmesser | 36 | Außenseite |
| 14 | Gewinde | 37 | Innenseite |
| 15 | Adaptereinrichtung | 38 | Kombinationsanschlag |
| 20 | Einwirkabschnitt | 40 | Ventileinrichtung |
| 21 | Dynamikeinrichtung | 41 | Ventilkomponente |
| 22 | Strömungsmanipulator | 42 | Kontaktkraft |
| 23 | Schneckenelement | 43 | Ventilquerschnitt |
| 24 | Gewindegang | | |
| 25 | Steigung | 50 | Wasserhahn |
| 26 | Radialrichtung | 51 | Hahnauslass |
| 27 | Eingang | 52 | Außenzylinderfläche |
| 28 | Ausgang | | |
| 29 | Wandung des Einwirkabschnitts | 60 | Trinkhalm |
| | | 61 | Innendurchmesser |
| | | 62 | Außendurchmesser |
| | | 63 | Wandung |
| | | 64 | Kante |

## Patentansprüche

1. Reinigungsvorrichtung (1) für einen Trinkhalm (60), aufweisend
- einen Anschlussabschnitt (10) ausgebildet zum fest aber lösbaren Verbinden der Reinigungsvorrichtung (1) an einen Wasserhahn (50),
- einen Auslassabschnitt (30) mit einer Aufnahmeeinrichtung (34) mit einer definierten Axialrichtung (32) und Radialrichtung (33) zur Aufnahme eines Trinkhalms (60), und
- einen Einwirkabschnitt (20),
- wobei die Reinigungsvorrichtung (1) derart mit einem Eingangsquerschnitt (11) und einem Ausgangsquerschnitt (31) ausgebildet ist, sodass der Anschlussabschnitt (10) über den Einwirkabschnitt (20) strömungstechnisch mit dem Auslassabschnitt (30) verbunden ist,
- wobei ein Verhältnis einer Fläche des Eingangsquerschnitts (11) zu einer Fläche des Ausgangsquerschnitts (31) mehr als 10, insbesondere mehr als 15, bevorzugt mehr als 20, insbesondere bevorzugt mehr als 23, weniger als 40, insbesondere weniger als 35, bevorzugt weniger als 30, insbesondere bevorzugt weniger als 28, und/oder in etwa 25 beträgt,
- wobei die Aufnahmeeinrichtung (34) derart mit einer Dichtfläche (35) ausgestaltet ist, sodass ein Trinkhalm (60) bei Anlage an der Dichtfläche (35) abdichtend von dem Auslassabschnitt (30) aufnehmbar ist,
**dadurch gekennzeichnet, dass**
der Einwirkabschnitt (20) eine Dynamikeinrichtung (21) zur Manipulation einer Fluidströmung durch die Reinigungsvorrichtung (1) aufweist, und die Dynamikeinrichtung (21) derart mit mindestens einem Strömungsmanipulator (22) ausgestattet und ausgebildet ist, sodass einem die Reinigungsvorrichtung (1) durchströmenden Fluid eine rotative Bewegungskomponente aufgezwungen werden kann.

2. Reinigungsvorrichtung (1) nach Anspruch 1, wobei die Dichtfläche (35) in Axialrichtung (32) zumindest teilweise Kegelstumpf-förmig, und insbesondere in Radialrichtung (33) kreisrund oder oval, ausgebildet ist, und wobei insbesondere eine Kegelstumpf-förmige und/oder Konus-Oberfläche der Aufnahmeeinrichtung gegenüber der Axialrichtung (32) mit einem Winkel von mindestens 8°, insbesondere mindestens 10°, bevorzugt mindestens 15°, insbesondere bevorzugt mindestens 18°, und/oder von maximal 45°, insbesondere maximal 30°, bevorzugt maximal 25°, insbesondere bevorzugt maximal 22° geneigt ist.

3. Reinigungsvorrichtung (1) nach Anspruch 2, wobei die Dichtfläche (35) zur Aufnahme eines Trinkhalms (60) an einer Außenseite (36) der Aufnahmeeinrichtung (34) oder an einer Innenseite (37) der Aufnahmeeinrichtung (34) ausgebildet ist.

4. Reinigungsvorrichtung (1) nach einem der voranstehenden Ansprüche, hergestellt aus einem Elastomer, aus Silikon, Acrylat-Kautschuk oder aus Natur-Kautschuk, vorzugsweise einstückig.

5. Reinigungsvorrichtung (1) nach einem der voranstehenden Ansprüche, hergestellt mithilfe eines 3-dimensionalen Druckverfahrens.

6. Reinigungsvorrichtung (1) nach einem der voranstehenden Ansprüche, wobei der Einwirkabschnitt (20) derart ausgebildet ist, sodass sich ein Strömungsquerschnitt für ein Fluid durch den Einwirkabschnitt (20) von Eingangsquerschnitt (11) zu Ausgangsquerschnitt (31) zumindest abschnittsweise oder durchgehend monoton verringert.

7. Reinigungsvorrichtung (1) nach einem der voranstehenden Ansprüche, wobei der Strömungsmanipulator (22) als Schneckenelement (23) mit mindestens einem Gewindegang (24) ausgebildet ist.

8. Reinigungsvorrichtung (1) nach Anspruch 7, wobei das Schneckenelement (23) mindestens zwei, bevorzugt mindestens drei Gewindegänge aufweist.

9. Reinigungsvorrichtung (1) nach Anspruch 7 oder 8, wobei eine Steigung (25) eines Gewindegangs (24) gegenüber einer von der Radialrichtung (33) aufgespannten Querschnittsebene mehr als 20°, insbesondere mehr als 30°, bevorzugt mehr als 35°, insbesondere bevorzugt mehr als 40°, und/oder weniger als 70°, insbesondere weniger als 60°, bevorzugt weniger als 55°, insbesondere bevorzugt weniger als 50°, und/oder in etwa 45° beträgt.

10. Reinigungsvorrichtung (1) nach Anspruch 8 oder 9, wobei eine Steigung (24) der Gewindegänge (24) in Axialrichtung (32) vom Eingangsquerschnitt (11) zum Auslassquerschnitt (31) zumindest teilweise oder stetig abnimmt.

11. Reinigungsvorrichtung (1) nach einem der voranstehenden Ansprüche, wobei der Anschlussabschnitt (10) derart mit einer Anschlussinnenfläche (12) mit einem Innendurchmesser (13), insbesondere einstückig, aus einem Elastomer, aus Silikon, Acrylat-Kautschuk oder aus Natur-Kautschuk hergestellt ist, sodass die Reinigungsvorrichtung (1) an einen Hahnauslass (51) eines Wasserhahns (50) eines Spülbeckens aufsteckbar ist, insbesondere wobei der Hahnauslass (51) einen maximalen Außendurchmesser von mehr als 15 mm, insbesondere mehr als 20 mm, bevorzugt mehr als 22 mm, und/oder weniger als 35 mm, insbesondere weniger als 30 mm, bevorzugt weniger als 28mm, und/oder in etwa 20 mm, in etwa 25 mm, und/oder in etwa 30 mm beträgt.

12. Reinigungsvorrichtung (1) nach Anspruch 11, wobei der Anschlussabschnitt (10) zumindest teilweise Kegelstumpf-förmig mit einem sich zumindest abschnittsweise in Richtung des Auslassquerschnitts (31) verjüngenden Innendurchmesser (13) ausgebildet ist.

13. Reinigungsvorrichtung (1) nach einem der Ansprüche 1 bis 10, wobei der Anschlussabschnitt (10) als oder mit einer Adaptereinrichtung (15) ausgebildet geeignet zum fest aber lösbaren Verbinden mit einem Gewinde (14) eines Wasserhahns (50) ausgebildet ist.

14. Reinigungsvorrichtung (1) nach einem der voranstehenden Ansprüche, derart eine Ventileinrichtung (40) aufweisend, sodass ein Ventilquerschnitt (43) durch die Reinigungsvorrichtung (1) durch Ausüben einer Kontaktkraft (42) auf den Auslassabschnitt (30) und/oder durch Bewegen des Auslassabschnitts (30), insbesondere in Axialrichtung (32), freigegeben wird.

15. Reinigungsvorrichtung (1) noch Anspruch 14, wobei zumindest eine Ventilkomponente (41) der Ventileinrichtung (40), insbesondere der Auslassabschnitt (30), in Axialrichtung (32) an der Reinigungsvorrichtung (1) derart verschiebbar gelagert ist, sodass ein in der Reinigungsvorrichtung (1) unter Druck stehendes Fluid die Ventilkomponente (41) in einer Position halten kann, sodass ein Ventilquerschnitt (43) durch die Reinigungsvorrichtung (1) verschlossen ist.

## Claims

1. Cleaning device (1) for a drinking straw (60), comprising
- a connecting portion (10) designed for fixedly but releasably connecting the cleaning device (1) to a tap (50),
- an outlet portion (30) which has a receiving means (34) having a defined axial direction (32) and radial direction (33) for receiving a drinking straw (60), and
- an action portion (20),
- the cleaning device (1) being designed with an inlet cross section (11) and an outlet cross section (31), such that the connection portion (10) is fluidically connected to the outlet portion (30) via the action portion (20),
- a ratio of an area of the inlet cross section (11) to an area of the outlet cross section (31) being more than 10, in particular more than 15, preferably more than 20, particularly preferably more than 23, less than 40, in particular less than 35, preferably less than 30, particularly preferably less than 28, and/or approximately 25,
- the receiving means (34) being designed with a sealing surface (35) such that a drinking straw (60) can be sealingly received by the outlet portion (30) when it is in contact with the sealing surface (35),
**characterised in that**
the action portion (20) comprises a dynamic means (21) for manipulating a fluid flow through the cleaning device (1), and the dynamic means (21) is equipped with at least one flow manipulator (22) and designed such that a rotational movement component can be imposed on a fluid flowing through the cleaning device (1).

2. Cleaning device (1) according to claim 1, wherein the sealing surface (35) is at least partially frustoconical in the axial direction (32), and in particular is circular or oval in the radial direction (33), and wherein a frustoconical and/or cone surface of the receiving means is in particular inclined with respect to the axial direction (32) at an angle of at least 8°, in particular at least 10°, preferably at least 15°, particularly preferably at least 18°, and/or at most 45°, in particular at most 30°, preferably at most 25°, particularly preferably at most 22°.

3. Cleaning device (1) according to claim 2, wherein the sealing surface (35) for receiving a drinking straw (60) is formed on an outer side (36) of the receiving means (34) or on an inner side (37) of the receiving means (34).

4. Cleaning device (1) according to any of the preceding claims, made of an elastomer, silicone, acrylate rubber or natural rubber, preferably in one piece.

5. Cleaning device (1) according to any of the preceding claims, produced using a 3-dimensional printing method.

6. Cleaning device (1) according to any of the preceding claims, wherein the action portion (20) is designed such that a flow cross section for a fluid through the action portion (20) monotonically decreases at least in portions or continuously from the inlet cross section (11) to the outlet cross section (31).

7. Cleaning device (1) according to any of the preceding claims, wherein the flow manipulator (22) is designed as a helical element (23) having at least one turn (24).

8. Cleaning device (1) according to claim 7, wherein the helical element (23) comprises at least two, preferably at least three turns.

9. Cleaning device (1) according to either claim 7 or claim 8, wherein a pitch (25) of a turn (24), with respect to a cross-sectional plane spanned by the radial direction (33), is more than 20°, in particular more than 30°, preferably more than 35°, particularly preferably more than 40°, and/or less than 70°, in particular less than 60°, preferably less than 55°, particularly preferably less than 50°, and/or approximately 45°.

10. Cleaning device (1) according to either claim 8 or claim 9, wherein a pitch (24) of the turns (24) in the axial direction (32) decreases at least partially or continuously from the inlet cross section (11) to the outlet cross section (31).

11. Cleaning device (1) according to any of the preceding claims, wherein the connection portion (10) is produced with a connecting inner surface (12) having an inner diameter (13), in particular in one piece, from an elastomer, silicone, acrylate rubber or natural rubber, such that the cleaning device (1) can be fitted onto a tap outlet (51) of a tap (50) of a sink, in particular wherein the tap outlet (51) has a maximum outer diameter of more than 15 mm, in particular more than 20 mm, preferably more than 22 mm, and/or less than 35 mm, in particular less than 30 mm, preferably less than 28 mm, and/or approximately 20 mm, approximately 25 mm, and/or approximately 30 mm.

12. Cleaning device (1) according to claim 11, wherein the connection portion (10) is at least partially frustoconical and has an internal diameter (13) which tapers at least in portions in the direction of the outlet cross section (31).

13. Cleaning device (1) according to any of claims 1 to 10, wherein the connection portion (10) is formed as or with an adapter means (15) for fixedly but releasably connecting to a thread (14) of a tap (50).

14. Cleaning device (1) according to any of the preceding claims, comprising a valve means (40) such that a valve cross section (43) is released by the cleaning device (1) by exerting a contact force (42) on the outlet portion (30) and/or by moving the outlet portion (30), in particular in the axial direction (32).

15. Cleaning device (1) as well as claim 14, wherein at least one valve component (41) of the valve means (40), in particular the outlet portion (30), is mounted so as to be displaceable in the axial direction (32) on the cleaning device (1) such that a fluid under pressure in the cleaning device (1) can hold the valve component (41) in a position such that a valve cross section (43) is closed by the cleaning device (1).

## Revendications

1. Dispositif de nettoyage (1) pour une paille (60), présentant
- une section de raccordement (10) réalisée pour la connexion fixe, mais amovible, du dispositif de nettoyage (1) à un robinet (50),
- une section de sortie (30) comportant un moyen de réception (34) comportant une direction axiale (32) et une direction radiale (33) définies pour la réception d'une paille (60), et
- une section d'action (20),
- le dispositif de nettoyage (1) étant réalisé avec une coupe transversale d'entrée (11) et une coupe transversale de sortie (31) de telle sorte que la section de raccordement (10) est connectée fluidiquement à la section de sortie (30) par l'intermédiaire de la section d'action (20),
- un rapport d'une surface de la coupe transversale d'entrée (11) à une surface de la coupe transversale de sortie (31) étant supérieur à 10, en particulier supérieur à 15, de préférence supérieur à 20, en particulier de préférence supérieur à 23, inférieur à 40, en particulier inférieur à 35, de préférence inférieur à 30, en particulier de préférence inférieur à 28 et/ou d'environ 25,
- le moyen de réception (34) étant doté d'une surface d'étanchéité (35) de telle sorte qu'une paille (60) peut être reçue de façon étanche par la section de réception (30) lors de son appui contre la surface d'étanchéité (35),
**caractérisé en ce que**
la section d'action (20) présente un moyen dynamique (21) pour la manipulation d'un courant de fluide à travers le dispositif de nettoyage (1), et le moyen dynamique (21) est muni et conçu avec au moins un manipulateur de courant (22) de telle sorte qu'une composante rotative de mouvement peut être imposée à un fluide traversant le dispositif de nettoyage (1).

2. Dispositif de nettoyage (1) selon la revendication 1, dans lequel la surface d'étanchéité (35) est réalisée, dans la direction axiale (32), au moins partiellement en forme de cône tronqué, et en particulier dans la direction radiale (33), en forme ronde ou ovale, et dans lequel une surface en forme de cône tronqué et/ou conique du moyen de réception est en particulier inclinée, par rapport à la direction axiale (32), d'un angle d'au moins 8°, en particulier d'au moins 10°, de préférence d'au moins 15°, en particulier de préférence d'au moins 18°, et/ou de 45° au maximum, en particulier de 30° au maximum, de préférence de 25° au maximum, en particulier de préférence de 22° au maximum.

3. Dispositif de nettoyage (1) selon la revendication 2, dans lequel la surface d'étanchéité (35) est réalisée, pour la réception d'une paille (60), sur un côté extérieur (36) du moyen de réception (34) ou sur un côté intérieur (37) du moyen de réception (34).

4. Dispositif de nettoyage (1) selon l'une quelconque des revendications précédentes, fabriqué en un élastomère, en silicone, en caoutchouc d'acrylate ou en caoutchouc naturel, de préférence d'une pièce.

5. Dispositif de nettoyage (1) selon l'une quelconque des revendications précédentes, fabriqué à l'aide d'un procédé d'impression tridimensionnelle.

6. Dispositif de nettoyage (1) selon l'une quelconque des revendications précédentes, dans lequel la section d'action (20) est réalisée de telle sorte qu'une coupe transversale d'écoulement pour un fluide à travers la section d'action (20) diminue de façon monotone au moins par endroits ou sans interruption depuis la coupe transversale d'entrée (11) jusqu'à la coupe transversale de sortie (31).

7. Dispositif de nettoyage (1) selon l'une quelconque des revendications précédentes, dans lequel le manipulateur de courant (22) est réalisé sous la forme d'un élément de vis sans fin (23) comportant au moins un filetage (24).

8. Dispositif de nettoyage (1) selon la revendication 7, dans lequel l'élément de vis sans fin (23) présente au moins deux, de préférence au moins trois filetages.

9. Dispositif de nettoyage (1) selon la revendication 7 ou 8, dans lequel une pente (25) d'un filetage (24) par rapport à un plan transversal défini par la direction radiale (33) est supérieure à 20°, en particulier supérieure à 30°, de préférence supérieure à 35°, en particulier de préférence supérieure à 40°, et/ou inférieure à 70°, en particulier inférieure à 60°, de préférence inférieure à 55°, en particulier de préférence inférieure à 50°, et/ou d'environ 45°.

10. Dispositif de nettoyage (1) selon la revendication 8 ou 9, dans lequel une pente (24) des filetages (24) diminue au moins partiellement ou de manière constante dans la direction axiale (32) depuis la coupe transversale d'entrée (11) jusqu'à la coupe transversale de sortie (31).

11. Dispositif de nettoyage (1) selon l'une quelconque des revendications précédentes, dans lequel la section de raccordement (10) est fabriquée, en particulier d'une pièce, avec une surface interne de raccordement (12) ayant un diamètre interne (13), en un élastomère, en silicone, en caoutchouc acrylate ou en caoutchouc naturel, de telle sorte que le dispositif de nettoyage (1) peut être emboîté à une sortie de robinet (51) d'un robinet (50) d'un évier, la sortie de robinet (51) ayant en particulier un diamètre externe maximal supérieur à 15 mm, en particulier supérieur à 20 mm, de préférence supérieur à 22 mm, et/ou inférieur à 35 mm, en particulier inférieur à 30 mm, de préférence inférieur à 28 mm, et/ou d'environ 20 mm, d'environ 25 mm et/ou d'environ 30 mm.

12. Dispositif de nettoyage (1) selon la revendication 11, dans lequel la section de raccordement (10) est réalisée au moins partiellement en forme de cône tronqué avec un diamètre interne (13) qui diminue au moins par endroits dans la direction de la coupe transversale de sortie (31).

13. Dispositif de nettoyage (1) selon l'une quelconque des revendications 1 à 10, dans lequel la section de raccordement (10) est réalisée sous forme de ou avec un moyen d'adaptation (15), approprié pour la connexion fixe, mais amovible, à un filetage (14) d'un robinet (50).

14. Dispositif de nettoyage (1) selon l'une quelconque des revendications précédentes, présentant un moyen de vanne (40) de telle sorte qu'une coupe transversale de vanne (43) est libérée par le dispositif de nettoyage (1) par l'application d'une force de contact (42) sur la section de sortie (30) et/ou par le déplacement de la section de sortie (30), en particulier dans la direction axiale (32).

15. Dispositif de nettoyage (1) selon la revendication 14, dans lequel au moins un composant de vanne (41) du moyen de vanne (40), en particulier la section de sortie (30), est monté coulissant dans la direction axiale (32) sur le dispositif de nettoyage (1) de telle sorte qu'un fluide sous pression dans le dispositif de nettoyage (1) peut maintenir le composant de vanne (41) dans une position de telle sorte qu'une coupe transversale de vanne (43) est fermée par le dispositif de nettoyage (1).
